Europäisches Patentamt

European Patent Office

Office européen des brevets

(11) Veröffentlichungsnummer: **0 171 55**

**A2**

(12) # EUROPÄISCHE PATENTANMELDUNG

(21) Anmeldenummer: **85107766.9**

(22) Anmeldetag: **22.06.85**

(51) Int. Cl.⁴: **C 12 C 1/00**
**A 01 C 1/02**

(30) Priorität: **11.08.84 DE 3429694**

(43) Veröffentlichungstag der Anmeldung:
**19.02.86 Patentblatt 86/8**

(84) Benannte Vertragsstaaten:
**CH DE FR GB LI**

(71) Anmelder: **Firma Seeger GmbH**
**Boschstrasse 7**
**D-7067 Plüderhausen(DE)**

(72) Erfinder: **Kalinowski, Raimund**
**Münstedterstrasse 15a**
**D-3300 Braunschweig(DE)**

(72) Erfinder: **Schäfer, Heinrich, Dipl.-Ing.**
**Hofstrasse 14**
**D-7300 Esslingen(DE)**

(72) Erfinder: **Narup, Ulrich**
**Schmiedeberg 2**
**D-3341 Hedeper(DE)**

(74) Vertreter: **Wolf, Eckhard et al,**
**Patentanwälte, Dr.-Ing. Eugen Maier Dr.-Ing. Eckhard**
**Wolf Dr.-Ing. Hans Vetter Pischekstrasse 19**
**D-7000 Stuttgart 1(DE)**

(54) **Verfahren und Vorrichtung zum Weichen, Keimen und/oder Darren von Getreide bzw. Grünmalz.**

(57) Bei einem Verfahren zum Weichen, Keimen und oder Darren von Getreide, wie Gerste, bzw. Grünmalz wird das Keimgut zumindest über einen Teil der Behandlungszeit innerhalb eines Vakuumbehälters (10) einem Unterdruck ausgesetzt, der im wesentlichen den Wasserdampfdruck bei der eingestellten Guttemperatur entspricht. Das von der Oberfläche der Gutteilchen verdampfende Wasser wird unter selbsttätiger Aufrechterhaltung des Unterdruck an einer kalten Wärmeübertragungsfläche kondensiert und zur Wiederverwendung aufgefangen. Die Guttempertur kann durch Regeln des Unterdrucks und oder der anfallenden Kondensatmenge nach Maßgabe der im Gut entstehenden oder der dem Gut zugeführten Wärme auf einen vorgegebenen Wert eingestellt werden. Ebenso kann die Luft- oder Sauerstoffzufuhr in den Vakummbehälter im Verfahrensablauf weitgehend beliebig variiert werden. Mit dem beschriebenen Verfahren können Einflüsse des Umgebungsklimas sowie der Zusammensetzung der Umgebungsluft sowohl beim Keimen als auch beim Darren nahezu vollständig eliminiert werden. Die Bildung von Nitrosaminen wird ebenso vermieden wie die dadurch bei anderen Verfahren bedingte Umweltverschmutzung. Der Einsatz einer Wärmepumpe (38) ermöglicht die Rückführung der Kondensationswärme in einen Heizkreislauf (34) zur Aufheizung des Guts, was einen relativ niedrigen Energiebedarf zur Folge hat.

EP 0 171 553 A2

Fig. 1

Beschreibung

Die Erfindung betrifft ein Verfahren zum Weichen, Keimen und/oder Darren von Getreide bzw. Grünmalz der im Oberbegriff des Anspruchs 1 angegebenen Gattung, sowie eine Vorrichtung zur Durchführung dieses Verfahrens.

Die bekannten Verfahren der genannten Art arbeiten durchweg unter Atmosphärendruck und bei Zutritt atmosphärischer Luft. Vor allem beim Darren, bei welchem das in vorhergehenden Verfahrensabschnitten gekeimte Grünmalz zum Zwecke der Haltbarmachung sowie der Fixierung der Inhaltsstoffe getrocknet und einer Temperaturbehandlung ausgesetzt wird, wird das auf Lochblechhorden befindliche Gut von einem Luftstrom durchsetzt. Der Luftstrom wird nach vorgeschriebenem Programm hinsichtlich Temperatur und Luftmenge konditioniert. Regelmäßig dauert ein solcher Darrprozeß 20 oder 40 Stunden. In dem Luftstrom, der von der Umgebungsluft entnommen wird, sind die gesamten Luftverunreinigungen enthalten. Dazu gehören u.a. auch Stickoxide, die nach neuesten Erkenntnissen maßgeblich für die Bildung von Nitrosaminen, insbesondere von Nitrosdimethylamin, während des Darrprozesses verantwortlich sind. Die Stickoxide lassen sich mit vertretbarem Aufwand nicht aus der Luft entfernen, zumal die für den Darrprozeß erforderlichen Luftmengen sehr groß sind.

Es wurde daher bereits versucht, die Nitrosaminbildung durch Herabsetzung des pH-Werts an der Oberfläche der Gutkörner zu reduzieren. Hierzu wurde einmal die bio-Das bekannte Durchluft-Darrverfahren hat ferner den Nachteil, daß große Luftmengen unter hohem Energieeinsatz aufgeheizt werden müssen. Man kann diese Energie zwar teilweise über Wärmepumpen wieder zurückgewinnen, allerdings mit entsprechendem zusätzlichem apparativen Aufwand. Hinzu kommt, daß die durchströmende Luft den normalen Luftsauerstoffanteil enthält. Infolge der Staubbildung beim Darrvorgang erhält man dadurch ein zündfähiges Gemisch, das zu schwer löschbaren Bränden oder gar zu Explosionen führen kann.

Die Trocknungsdauer im Luftstrom hängt ab von der Wasseraufnahmefähigkeit der Luft. Diese wird beeinflußt durch die absolute Luftfeuchte der Umgebungsluft und durch die eingestellte Temperatur. Je niedriger die Temperatur und je höher die Feuchte der Umgebungsluft ist, umso größer muß bei vorgegebener Prozeßdauer der Luftdurchsatz gewählt werden. Andererseits hängen die im Keimgut ablaufenden biochemischen Prozesse sowohl von der Feuchte als auch von der Behandlungstemperatur ab: Je höher die Feuchte ist, umso niedriger sollte die Lufttemperatur gewählt werden. Dadurch ergeben sich abhängig vom Umgebungsklima und den jahreszeitlichen Bedingungen erhebliche Anpassungsschwierigkeiten.

Ein weiterer Nachteil der Lufttrocknung ist darin zu sehen, daß das stationäre Keimgut von unten nach oben schichtweise trocknet, so daß sich ein unerwünschter Feuchtigkeitsgradient im Keimguthaufen ergibt. Das bedeutet, daß die unteren Schichten bereits trocken sind, während in den oberen Schichten aufgrund ihrer Feuchte noch biochemische Umwandlungsprozesse stattfinden. Dadurch erhält man eine Ungleichmäßigkeit im Lösungsverhalten der Körner in den verschiedenen Schichten, die sich ungünstig auf die Ausbeute auswirken.

Der Erfindung liegt daher die Aufgabe zugrunde, ein Verfahren zum Weichen, Keimen und/oder Darren zu entwickeln, das einen relativ geringen Energiebedarf aufweist, die Bildung von Nitrosaminen ohne die Gefahr einer Umweltverschmutzung vermeidet und bei welchem unabhängig vom Umgebungsklima die Behandlungstemperatur und der Sauerstoffanteil beliebig eingestellt und den einzelnen Verfahrensstufen optimal angepaßt werden können. Eine weitere Aufgabe besteht darin, eine vorteilhafte Vorrichtung zur Durchführung dieses Verfahrens zu schaffen.

Zur Lösung dieser Aufgabe wird die in Anspruch 1 angegebenen Merkmalskombination vorgeschlagen. Weitere vorteilhafte Ausgestaltungen und Weiterbildungen der Erfindung ergeben sich aus den Unteransprüchen.

Die Erfindung geht von dem Gedanken, daß bei abnehmenden Druck die Siedetemperatur von Wasser abnimmt und der Verdampfungsprozeß beschleunigt wird. Jedem Druck ist im Dampf-Flüssigkeitsgleichgewicht eine bestimmte Siedetemperatur zugeordnet, die auch bei Wärmezufuhr konstant bleibt, solange noch flüssiges Wasser vorhanden ist. Dieses Prinzip kann bei geringstmöglichem Energieeinsatz zu einer exakten Temperaturregelung im Gutbereich angewandt werden, insbesondere wenn dafür gesorgt wird, daß für die Aufrechterhaltung des Unterdrucks keine unnötige Pumpenergie benötigt wird.

In diesem Sinne hat sich als besonders zweckmäßig erwiesen, das von der Oberfläche der feuchten Gutteilchen verdampfte Wasser an der Oberfläche einer Wärmeübertragungsfläche mit niedrigerer Temperatur als die Guttemperatur zu kondensieren und durch Regeln der Kondensatmenge nach Maßgabe der im Gut entstehenden oder der dem Gut zugeführten Wärme den Druck und damit die Guttemperatur konstant zu halten. Das verdampfte Wasser kann im Verlauf des Weich- und Keimprozesses durch Zugabe von Wasser in das Gut wieder ersetzt werden, wobei sogar eine Rückführung des Kondensats möglich ist, da es keine lebensmittelrechtlich unzulässigen Verunreinigungen enthält. Weiter besteht die Möglichkeit, sowohl die Temperatur als auch den Sauerstoffgehalt im Behälter zu regeln, um optimale Wachstums- und Lösungsbedingungen zu schaffen. In der Wachstumsphase wird man häufiger belüften, um mehr Sauerstoff zuzuführen, während in der Lösungsphase eher mit einem geringeren Sauerstoffanteil gearbeitet wird, um die Ausbeute zu verbessern. Der Keimprozeß kann allein durch gezielte Verdampfung im Zustand des Unterdrucks bei einer optimalen Temperatur zwischen etwa 10 bis 18 °C durchgeführt werden. Weiter kann in der Lösungsphase durch Variation des Sauerstoffgehalts die cytolytische und durch Variation der Temperatur die proteolytische Lösung in gewünschter Weise beeinflußt werden.

Der erfindungsgemäße Darrprozeß läuft unter vollständigem Luftabschluß ab, so daß unerwünschte Einflüsse aus der Umgebungsluft und des Umgebungsklimas nahezu vollständig eliminiert werden können. Die Bildung von Nitrosaminen wird ebenso verhindert wie die bei anderen Verfahren in diesem Zusammenhang auftretende Umweltverschmutzung. Extraktverluste können durch gezielte Variation von Temperatur und Sauerstoffgehalt im Verlauf des Darrprozesses auf ein Minimum herabgesetzt werden, wenn man dazuhin berücksichtigt, daß innerhalb einer jeden Charge weitgehend homogene Zustandsbedingungen gewährleistet werden können.

Eine vorteilhafte Vorrichtung zur Durchführung des erfindungsgemäßen Verfahrens weist einen Vakuumbehälter zur Aufnahme des zu behandelnden Gutes auf, der eine druckdicht verschließbare Be- und Entladeöffnung, einen Stutzen für den Anschluß einer Vakuumpumpe sowie eine den Gutraum begrenzende und/oder in diesen eingreifende beheizbare und/oder kühlbare Wärmetauscherfläche aufweist. Weitgehend homogene Verhältnisse erhält man, wenn der Vakuumbehälter als Mischbehälter ausgebildet ist, der entweder selbst um eine horizontale Mittelachse drehbar ist oder entsprechend drehbare Einbauten aufweist, die eine ständige oder zeitweilige Durchmischung des Gutes ermöglichen.

Um den Unterdruck im Vakuumbehälter möglichst energiesparend aufrechtzuerhalten, steht der Innenraum des Vakuumbehälters mit einem Kondensator in Verbindung, in welchem das aus dem Gut verdampfte Wasser kondensiert und aufgefangen wird. Die im Kondensator anfallende Kondensationswärme kann über eine Wärmepumpe einem Heizkreislauf zugeführt werden, der den im Vakuumbehälter angeordneten Wärmetauscher mit Wärmeenergie versorgt.

Bei einer anderen bevorzugten Vorrichtung ist der Vakuumbehälter stationär angeordnet und enthält das Gut in Form
einer Schicht mit gleichmäßiger Dicke von weniger als
500 mm, vorzugsweise von etwa 250 mm, die mit ihrer einen
Seite an der Wärmetauscherfläche anliegt und mit der gegenüberliegenden Seite zu einer mit der Vakuumpumpe verbundenen
Absaugfläche weist. Der Vakuumbehälter ist dabei zweckmäßig
als senkrecht angeordneter Zylinder ausgebildet, der einen
doppelwandigen Mantel als Wärmetauscherfläche und ein zentrales axiales Siebrohr als Absaugfläche aufweist. Mehrere
dieser senkrecht angeordneten Zylinder können zu einer
Matrixanordnung mit gemeinsamer Be- und Entladeeinrichtung
zusammengefaßt werden. Eine solche Anordnung weist ein
günstiges Verhältnis zwischen Nutzvolumen und Bauvolumen
auf. Außerdem sind die Abstrahlverluste gering.

Im folgenden wird die Erfindung anhand der Zeichnung näher
erläutert. Es zeigen

Fig. 1    ein Schema einer Unterdruck-Mälzereianlage mit
          drehbarem Vakuumbehälter;

Fig. 2    ein zylindrischer Vakuumbehälter zur Aufnahme
          von Keim- und Darrgut.

Fig. 3    ein Schema einer Unterdruck-Mälzereianlage mit
          zylindrischen Vakuumbehältern entsprechend Fig. 2;

Fig. 4    eine Draufsicht auf die Zylinderanorndung nach
          Fig. 3.

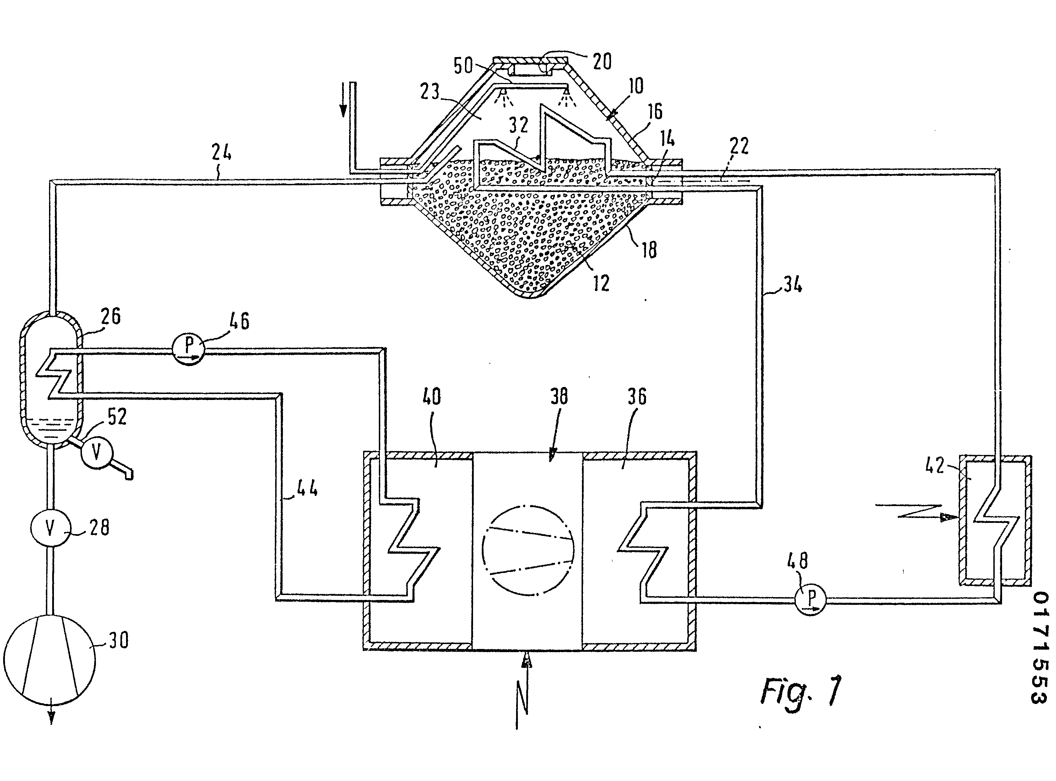

Die in Fig. 1 schematisch dargestellte Anlage zum Weichen, Keimen und/oder Darren von Getreide bzw. Grünmalz enthält mindestens einen Vakuumbehälter 10 zur Aufnahme des zu behandelnden Guts 12, der einen zylindrischen Mantel 14 mit beidseitig vorgeschweißten konischen Böden 16,18 aufweist. An dem in der Figur nach oben weisenden Boden 16 befindet sich eine druckdicht verschließbare Be- und Entladeöffnung 20, während an dem nach unten weisenden Boden 18 ein nicht dargestellter Mannlochstutzen vorgesehen sein kann. Der als Mischtrommel ausgebildete Vakuumbehälter 10 ist um eine horizontale Mittelachse 22 drehbar an einem nicht dargestellten Gestell gelagert. Er kann jedoch auch stationär aufgehängt und im Inneren mit drehbaren Mischflügeln versehen sein. Weiter ist das Innere 23 des Vakuumbehälters 10 über eine Leitung 24 mit einem Kondensator 26 und von dort aus über ein Drossel- und Abschaltventil 28 mit einer Vakuumpumpe 30 verbunden.

Der Vakuumbehälter enthält außerdem einen Wärmetauscher 32, der an einen externen Heizkreislauf 34 anschließbar ist. Die Rohrleitungen des Wärmetauschers 32 können dabei innerhalb des doppelwandig ausgebildeten Behältermantels angeordnet sein. Zur besseren Wärmeübertragung können ferner auch in das Behälterinnere 23 eingreifende, von dem Heizmedium durchströmte Wärmeübertragungsflächen vorgesehen werden. Die Aufheizung des Heizmediums erfolgt einmal auf der Seite des Kondensators 36 einer Wärmepumpe 38, die auf ihrer Verdampferseite 40 mit der am Vakuum-Kondensator 26 anfallenden Kondensationswärme beaufschlagt wird. Zum anderen enthält der Heizkreislauf 34 noch eine Zusatzheizung 42 zur Deckung des Wärmebedarfs in Verfahrensabschnitten, in denen im Vakuum-Kondensator 26 keine oder nur wenig Kondensationswärme anfällt. Als Wärmetransportmittel wird sowohl im Kühlkreislauf 44 als auch im Heizkreislauf 34 Wasser verwendet, das mit je einer Pumpe 46,48 umgewälzt wird.

Grundsätzlich ist es auch möglich, den Kondensator 36 der Wärmepumpe 38 unmittelbar als Heizfläche des Vakuumbehälters 10 und den Verdampfer 40 der Wärmepumpe 38 unmittelbar als Kühlfläche des Kondensators (26) auszubilden.

Ferner enthält der Vakuumbehälter 10 eine Sprüh- und Belüftungseinrichtung 50, über die er von außen her mit Wasser und/oder Gasen, wie Luft oder Sauerstoff beaufschlagt werden kann.

Die beschriebene Anordnung ist sowohl zum Weichen und Keimen von Getreide, insbesondere Gerste, als auch zum Darren von Grünmalz geeignet. Solange das zu behandelnde Gut 12 einen ausreichenden Feuchtigkeitsgehalt besitzt, der eine Verdampfung von Wasser an den Gutteilchen ermöglicht, läßt sich die Guttemperatur in allen drei genannten Verfahrensstufen durch Regeln des Unterdrucks oder der Kondensatmenge unter Berücksichtigung der jeweiligen Wärmezufuhr auf einen vorgegebenen Wert einstellen.

Durch den Verdampfungsprozeß wird dem Gut Wärme entzogen. Dadurch kann die im Verlauf des Keimens anfallende Wärme abgeführt und eine unerwünschte Temperaturerhöhung vermieden werden. Das beim Weichen und Keimen verdampfende Wasser wird über die Sprüheinrichtung 50 wieder ersetzt, um die notwendige Feuchtigkeit aufrechtzuerhalten. Zu diesem Zweck kann das im Vakuum-Kondensator 26 anfallende und über den Ablaufstutzen 52 nach außen geleitete Kondenswasser verwendet werden.

Neben der Temperatur kann auch der Sauerstoffgehalt im Inneren 23 des Vakuumbehälters 10 geregelt werden, so daß während des Keimens eine optimale Anpassung an die Wachstums- und Lösungsbedingungen ermöglicht wird. In der Wachstumsphase, in der ein erhöhter Sauerstoffbedarf besteht, ist eine häufigere Zufuhr von Frischluft oder Sauerstoff erforderlich als in der Lösungsphase, in der zur Erzielung einer besseren Ausbeute ein geringerer Sauerstoffanteil vorteilhaft ist. Die Temperatur kann während dieses Verfahrensabschnitts auf etwa 10 bis 18 $^{\circ}$C gehalten werden. Ohne die Verdampfungskühlung würde die Temperatur auf etwa 35 $^{\circ}$C ansteigen, bei der die Gefahr einer Schädigung des Keimguts bestünde.

Da Temperatur und Sauerstoffgehalt im Vakuumbehälter 10 unabhängig voneinander eingestellt werden können, ist es in der Lösungsphase auch möglich, die cytolytische Lösung (Zellwandlösung) und die proteolytische Lösung (Eiweißlösung) gezielt zu beeinflussen.

Das auf die vorbeschriebene Weise erzeugte Grünmalz braucht zum Darren nicht umgeladen zu werden. In diesem Verfahrensabschnitt wird zunächst im Vakuumbehälter 10 mit Hilfe der Vakuumpumpe 30 ein definierter Unterdruck eingestellt, der dem Dampfdruck bei der erwünschten Schwelktemperatur entspricht. Danach wird die Vakuumpumpe 30 mit Hilfe des Ventils 28 abgeschaltet oder in ihrer Wirkung soweit reduziert, daß eventuell noch eindringende Leckluft unter Beibehaltung des vorgegebenen Drucks entfernt werden kann. Sodann kann durch Wärmezufuhr über den Heizkreislauf 34, die zu einer Verdampfung von Wasser aus dem Gut führt, und durch gezielte Kondensation des verdampften Wasser in Vakuum-Kondensator 26 eine Trocknung, das sogenannte Schwelken durchgeführt werden, die bei einer Guttemperatur von etwa 25 bis 35 $^{\circ}$C sechs bis zehn Stunden lang dauert. In dieser Verfahrensstufe stellt sich bei optimaler Auslegung der Anlage die Temperatur des Kühlkreislaufs 44 am Eingang des Vakuum-Kondensators 26 auf ca. 3 bis 6 $^{\circ}$C und die des Heizkreislaufs 34 am Eingang des Vakuumbehälters 10 auf ca. 45 bis 60 $^{\circ}$C, vorzugsweise 55 $^{\circ}$C ein.

Der Trocknungsprozeß ist abgeschlossen, wenn die Guttemperatur vom sogenannten Durchbruchpunkt an wegen fehlender Verdampfung plötzlich ansteigt. Sobald die Guttemperatur einen Wert von etwa 50 $^{\circ}$C erreicht hat, wird die Vakuumpumpe erneut eingeschaltet und der Kondensator über einen Bypass überbrückt. Außerdem wird die Wärmepumpe 38 abgeschaltet, so daß der Heizkreislauf nur noch über die Zusatzheizung 42 versorgt wird. Auf diese Weise wird das Gut zunächst noch bis zu einer Temperatur von 70 bis 100 $^{\circ}$C aufgeheizt und dann bei annähernd konstanter Temperatur etwa zwei Stunden lang abgedarrt.

Das Schwelken und Abdarren erfolgt ebenso wie das Weichen und Keimen weitgehend ohne Luftzutritt von außen. Dadurch wird auch das Eindringen von Luftverunreinigungen, wie Stickoxide, verhindert, die vor allem bei den höheren Temperaturen sonst zu eine unerwünschten Bildung von Nitrosaminen führen könnten.

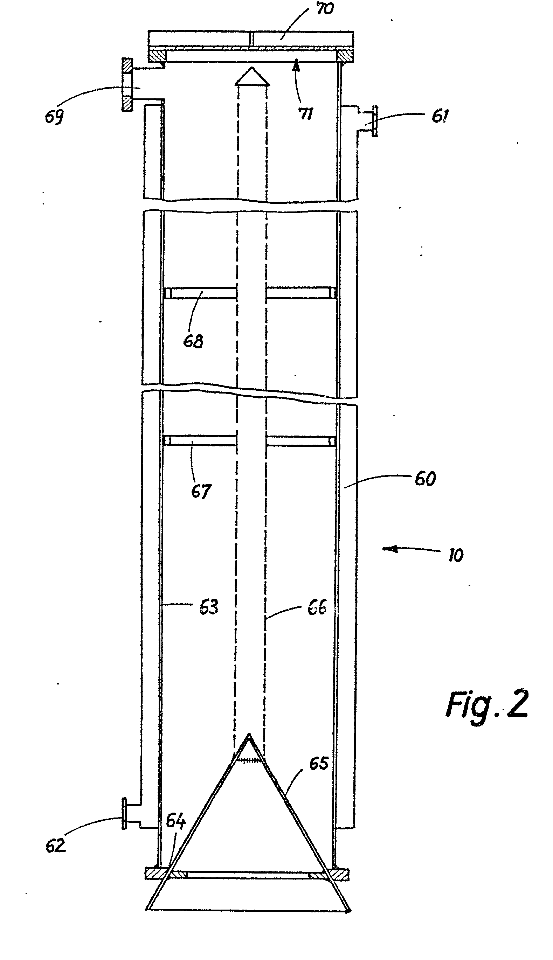

Bei dem in Fig. 2 bis 4 dargest...lten Ausführungsbeispiel sind die Vakuumbehälter 10 als stationäre, senkrecht angeordnete Zylinder ausgebildet, deren doppelwandiger Mantel 60 zwei Wasseranschlüsse 61,62 für den Heizkreislauf 34 aufweist. Die Innenseite des Mantels 60 bildet eine Wärmetauscherfläche 63. Eine an der Unterseite des Vakuumbehälters 10 befindliche Entladeöffnung 64 ist mit einem kreiskegelförmigen, axial verschiebbaren Verschlußorgan 65 verschließbar. Dieses Verschlußorgan 65 ist mit einem zentralen, axialen Siebrohr 66 verbunden, das zweckmäßig aus gestanztem Stahlblech mit einer Wandstärke von ca. 2 mm besteht. Das Siebrohr 66 wird an der Wandinnenfläche durch mehrere Stützringe 67,68 in seiner zentralen Lage gehalten, die beim Öffnen des Verschlußorgans 65 mit dem Siebrohr 66 verschoben werden und dadurch zugleich als Abstreifer für das Gut dienen. Das Gut kann dadurch schnell und vollständig entladen werden. Die Vakuumbehälter 10 weisen ferner einen Vakuumanschluß 69 auf, mit dem sie über eine Leitung 24 an die Vakuumpumpe 30 angeschlossen werden können. Ein zur Seite klappbarer oder abhebbarer Deckel 70 an der Oberseite der Vakuumbehälter 10 verschließt eine Beladeöffnung 71.

Das von oben eingefüllte Gut bildet eine Schicht zwischen der Wärmetauscherfläche 63 und dem Siebrohr 66, die auf der der Wärmetauscherseite beheizt und auf der Siebrohrseite durch Absaugen von Wasserdampf gekühlt wird. Untersuchungen haben gezeigt, daß bei einer Schichtdicke von 500 mm für den reinen Trockungsprozeß etwa 24 Stunden benötigt werden, woraus sich eine Zykluszeit für das Weichen, Keimen und Darren von insgesamt etwa 40 Stunden ergibt. Um eine Zykluszeit von 24 Stunden zu erhalten, ist dagegen eine Schichtdicke von 230 bis 270 mm, vorzugsweise von 250 mm, zu wählen.

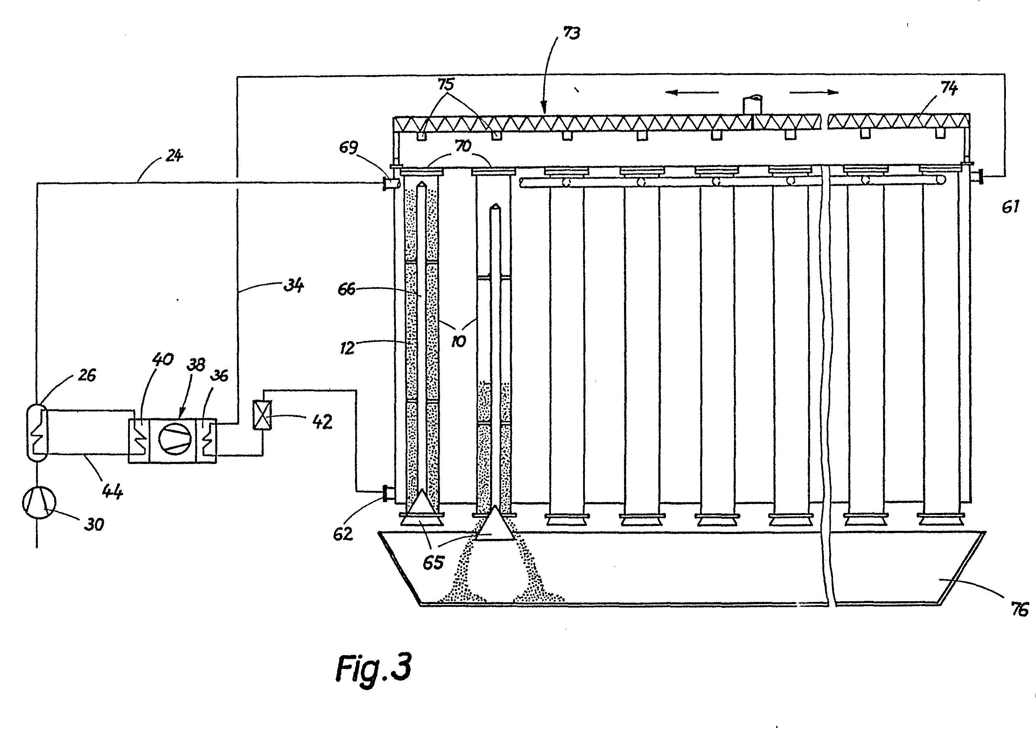

Bei dem in Fig. 3 und 4 gezeigten Ausführungsbeispiel sind mehrere Vakuumbehälter 10 zu einer Matrixanordnung zusammengefaßt. Die Kreisläufe und die Vakuumanlage entsprechen im wesentlichen der Anordnung nach Fig. 1. Die aus den doppelwandigen Mänteln der Vakuumbehälter 10 gebildeten Wärmetauscher sind im Heizkreislauf 34 teilweise parallel und in Reihe geschaltet. Die Vakuumanschlüsse 69 der Vakuumbehälter 10 sind über mehrere Sammelleitungen 71 mit der Leitung 24 verbunden. Jede Sammelleitung 71 ist durch eine Absperrvorrichtung 72 von der Leitung 24 abtrennbar. Zweckmäßig ist auch jeder einzelne Behälter 10 von der zugehörigen Sammelleitung 71 abtrennbar, um Einzelbeschickungen durchführen zu können.

Die Beschickungseinrichtung 73 besteht aus einem oberhalb der Behälteranordnung verfahrbaren, eine Beladeschnecke enthaltenden Kanal 74, der im Abstand voneinander angeordnete Beschickungsöffnungen 75 aufweist. Die Zuführung des Guts erfolgt über ein scherenartig ausfahrbares Zuführungsrohr 76. Die Beschickung der Vakuumbehälter 10 einer Zeile der Matrixanordnung erfolgt über den Kanal 74 und die Beschickungsöffnungen 75 entweder gemeinsam oder nacheinander.

Ein unter den Vakuumbehältern 10 angeordneter Entladebunker 76 dient zur Aufnahme des beim Öffnen der Verschlußorgane 65 herausfallenden Guts. Durch die kreiskegelförmigen Verschlußorgane 65 wird ein gleichmäßiger Auslauf des Guts gewährleistet. Der Entladebunker 76 kann durch wenigstens eine nicht dargestellte Entladeschnecke entleert werden.

0171553

Patentansprüche

1. Verfahren zum Weichen, Keimen und/oder Darren von
   Getreide bzw. Grünmalz bei welchem das zu behandelnde
   Gut über eine vorgegebene Bhandlungszeit hinsichtlich
   Temperatur, Feuchtigkeitsgehalt und/oder Luftzusammensetzung variabel einstellbaren Umgebungsbedingungen
   ausgesetzt wird, dadurch gekennzeichnet, daß das Gut
   zumindest über einen Teil der Behandlungszeit einem
   Unterdruck ausgesetzt wird.

2. Verfahren nach Anspruch 1, dadurch gekennzeichnet,
   daß der Unterdruck zumindest über einen Teil der Behandlungszeit im wesentlichen dem Wasserdampfdruck
   bei der eingestellten Guttemperatur entspricht.

3. Verfahren nach Anspruch 1 oder 2, dadurch gekennzeichnet, daß Wasser von der Oberfläche der feuchten
   Gutteilchen verdampft und der Wasserdampf an einer
   Wärmeübertragungsfläche mit niedrigerer Temperatur
   kondensiert wird.

4. Verfahren nach Anspruch 3, dadurch gekennzeichnet,
   daß der dem Gut beim Verdampfungsprozeß entzogene
   Wasseranteil während des Weich- und Keimprozesses
   durch Zugabe von Wasser dem Gut wieder zugeführt wird.

5. Verfahren nach Anspruch 4, dadurch gekennzeichnet,
   daß nach der wenigstens einmal erfolgenden Wasserzugabe das Gut belüftet, überschüssiges Wasser abgelassen und erneut ein Unterdruck eingestellt wird.

0171553

6. Verfahren nach einem der Ansprüche 1 bis 5, dadurch gekennzeichnet, daß die Guttemperatur durch Regeln des Unterdrucks und/oder der anfallenden Kondensatmenge nach Maßgabe der im Gut entstehenden oder der dem Gut zugeführten Wärme auf einen vorgegebenen Wert eingestellt wird.

7. Verfahren nach einem der Ansprüche 1 bis 6, dadurch gekennzeichnet, daß die Luft- oder Sauerstoffzufuhr in den Gutraum im Verlauf des Keimprozesses nach Maßgabe des Wachstums- und Lösungszustands des Guts variabel eingestellt wird.

8. Verfahren nach Anspruch 7, dadurch gekennzeichnet, daß in der Wachstumsphase des Guts ein hoher Sauerstoffanteil und in der Lösungsphase ein demgegenüber geringerer Sauerstoffanteil eingestellt wird.

9. Verfahren nach einem der Ansprüche 1 bis 6, dadurch gekennzeichnet, daß im Verlauf des Darrprozesses in einer kurzen Anlaufphase durch Absaugen von Luft aus einem druckdichten, feuchtes Keimgut enthaltenden Raum ein Druck eingestellt wird, der geringfügig unter dem Wasserdampfdruck bei der einzustellenden Guttemperatur von 25 bis 35 °C liegt, daß das Gut durch Wärmezufuhr und allmählichen Wasserentzug durch Verdampfung über eine vorgegebene Zeit von etwa 5 bis 20 Stunden, vorzugsweise 6 bis 10 Stunden, bei annähernd konstanter Temperatur von 25 bis 35 °C und einem im wesentlichen dem bei dieser Temperatur

- 16 -

0171553

herrschenden Dampfdruck entsprechenden Druck geschwelkt
wird, daß das verdampfte Wasser an einer Wärmeübertragungsfläche niedrigerer Temperatur kondensiert
wird, daß am Ende der Schwelkzeit die Guttemperatur
unter Aufrechterhaltung eines Unterdrucks allmählich
auf etwa 60 bis 70 °C angehoben wird und daß das Gut
anschließend bei einer annähernd konstanten Temperatur
zwischen 65 und 100 °C mindestens eine, vorzugsweise
zwei bis vier Stunden unter Aufrechterhaltung eines
Unterdrucks abgedarrt wird.

10. Verfahren nach einem der Ansprüche 3 bis 9, dadurch
    gekennzeichnet, daß die an der Wärmeübertragungsfläche
    anfallende Kondensationswärme über eine Wärmepumpe
    in einen das Gut aufheizenden Heizkreislauf zurückgeführt wird.

11. Verfahren nach einem der Ansprüche 3 bis 10, dadurch
    gekennzeichnet, daß das an der Wärmeübertragungsfläche
    anfallende Kondensat als Brauchwasser für den Weich-
    und Keimprozeß wiederverwendet wird.

12. Vorrichtung zur Durchführung des Verfahrens nach einem
    der Ansprüche 1 bis 11, gekennzeichnet durch wenigstens
    einen Vakuumbehälter (10) zur Aufnahme des zu behandelnden Gutes (12), der eine druckdicht verschließ-
    bare Be- und Entladeöffnung (20;71,64) einen Stutzen
    (69) für den Anschluß einer Vakuumpumpe (30) sowie
    eine den Gutraum (Innenraum 23) begrenzende und/oder
    in diesen eingreifende, beheizbare und/oder kühlbare
    Wärmetauscherfläche (32;63) aufweist.

0171553

13. Vorrichtung nach Anspruch 12, dadurch gekennzeichnet, daß das Gut im Vakuumbehälter (10) in einer Schicht angeordnet ist, die mit ihrer einer Seite an der Wärmetauscherfläche anliegt und mit der gegenüberliegenden Seite zu einer mit der Vakuumpumpe (30) verbundenen Absaugfläche weist.

14. Vorrichtung nach Anspruch 12, dadurch gekennzeichnet, daß die Dicke der Gutschicht weniger als 500 mm, vorzugsweise 230 bis 270 mm beträgt.

15. Vorrichtung nach Anspruch 13 oder 14, dadurch gekennzeichnet, daß der Vakuumbehälter (10) als senkrecht angeordneter Zylinder ausgebildet ist, der einen vorzugsweise doppelwandigen Mantel (60) als Wärmetauscherfläche (63) sowie ein zentrales, axiales Siebrohr (66), als Absaufläche ausweist.

16. Vorrichtung nach Anspruch 15, dadurch gekennzeichnet, daß die an der Unterseite des Vakuumbehälters (10) befindliche Entladeöffnung (14) mit einem zweckmäßig kreiskegelförmigen, axial verschiebbaren und vorzugsweise mit dem durch Abstreifer (67,68) an der Mantellinienfläche geführten Siebrohr (66) verbundenen Verschlußorgan (65) verschließbar ist.

17. Vorrichtung nach einem der Ansprüche 13 bis 16, dadurch gekennzeichnet, daß mehrere Vakuumbehälter (10) zu einer vorzugsweise rechteckigen mit gemeinsamer Be- und Entladeeinrichtung zusammengelegt sind, und daß die oben angeordneten Beladeöffnungen (71) der Vakuumbehälter (10) jeweils einzeln oder zeilenweise über eine Beschichtungseinrichtung (73) mit Gut (12) beschichtbar sind.

18. Vorrichtung nach Anspruch 17, dadurch gekennzeichnet, daß die Entladeöffnungen (64) in einen mit wenigstens einer Entladeschnecke ausgestatteten Entladebunker (76) münden.

19. Vorrichtung nach Anspruch 12 oder 13, dadurch gekennzeichnet, daß der Vakuumbehälter (10) als vorzugsweise um eine horizontale Mittelachse (22) motorisch drehbarer Mischbehälter ausgebildet ist.

20. Vorrichtung nach einem der Ansprüche 12 bis 19, dadurch gekennzeichnet, daß der Innenraum des Vakuumbehälters (10) mit einem außerhalb angeordneten Kondensator (26) verbindbar ist, der vorzugsweise in einer zur Vakuumpumpe (30) führenden Leitung (24) angeordnet ist.

21. Vorrichtung nach Anspruch 20, dadurch gekennzeichnet, daß der Kondensator (26) über eine zur Vakuumpumpe (30) führende Bypassleitung überbrückbar ist.

22. Vorrichtung nach Anspruch 20 oder 21, dadurch gekennzeichnet, daß der Kondensator über einen Kühlmittelkreislauf (44) mit dem Verdampfer (40) einer Wärmepumpe (38) verbunden ist, und daß ein zur Wärmepumpe (38) gehörender Kondensator (36) in einem den Wärmetauscher (32;60) des Vakuumbehälters (10) versorgenden, vorzugsweise eine Zusatzheizung (42) enthaltenden Heizkreislauf (34) angeordnet ist.

23. Vorrichtung nach Anspruch 22, dadurch gekennzeichnet, daß der mit Wasser als Kühlmedium betriebene Kühlkreislauf (44) des Vakuum-Kondensators (26) eine Vorlauftemperatur am Kondensatoreintritt von 0 bis 30 °C, vorzugsweise von 3 bis 5 °C, und der mit Wasser als Heizmedium betriebene Heizkreislauf (34) eine Vorlauftemperatur am Vakuumbehälter-Eintritt von 40 bis 85 °C, vorzugsweise von 50 bis 60 °C aufweist.

24. Vorrichtung nach Anspruch 20 oder 21, dadurch gekennzeichnet, daß der Kondensator (36) einer Wärmepumpe (38) unmittelbar als Heizfläche des Vakuumbehälters (10) und/oder der Verdampfer einer Wärmepumpe (38) unmittelbar als Kühlfläche des Vakuum-Kondensators (26) ausgebildet sind.

1/4

0171553

Fig. 1

Seeger GmbH   7064 Plüderhausen

Patentanwälte Dr.-Ing Eugen Maier – Dr.-Ing Eckhard Wolf   A 13015

Pischekstraße 19   7000 Stuttgart 1

2/4

0171553

Fig. 2

Fa. Seeger , 7067 Plüderhausen

Patentanwälte Dr -Ing Eugen Maier – Dr -Ing Eckhard Wolf    A 52 506

Pischekstraße 19 - 7000 Stuttgart 1

Fig.3

3/4

0171553